# EUROPEAN PATENT APPLICATION

(11) **EP 1 918 879 A1**
(43) Date of publication of application: **07.05.2008**
(21) Application number: 06123338.3
(22) Date of filing: 02.11.2006
(51) Int. Cl.: G06T 15/00

(54) **Rendering of regular volumetric data sets within a curved convex volume of interest**

(71) Applicant: Agfa HealthCare NV, 2640 Mortsel (BE)
(72) Inventor: Vlietinck, Jan, 2640 Mortsel (BE)
(74) Representative: Theunis, Patrick

(57) **Abstract**

A method of volume rendering a curved convex volume of interest of a regular grid volumetric data set with per pixel accuracy
wherein the pixels that belong to the projected curved convex volume of interest are determined and for each of those pixels the following steps are performed:
- determining the front intersection point of a projection ray and the curved convex volume of interest via exact mathematical root finding,
- determining the back intersection point of a projection ray and the curved convex volume of interest via exact mathematical root finding,
- finding the voxels of the volumetric data set that intersect with the ray segment running from the front intersection point to the back intersection point,
- performing a volume rendering method on the found voxels and output the result as a rendered pixel.

## Description

### FIELD OF THE INVENTION

This invention relates to the visualisation of regular grid volume sets, like those that are generated by medical scanners such as MR, CT, PET.

### BACKGROUND OF THE INVENTION

The need of examining the internals of patients in a non-invasive way let to the invention of several volumetric scanning modalities like MR, CT or PET. These scanners produce large volumetric data sets of a physical property measured on a fine volumetric grid superimposed on the subject under study.

In order to easily visually examine the volumetric data sets, volume rendering methods have been invented to display the volume directly in a 3D representation. Those methods include direct volume rendering, maximum intensity projection (MIP), minimum intensity projection (MinIP), average intensity projection, digital radiographiy reconstruction (DRR), double contrast barium enema simulation (DCBE). Those volume rendering methods enable the examiner to rotate, zoom and pan the volumetric data set in 3D.

Often the examiner only wants to see a small volume of interest instead of the whole volume. Displaying the whole volume would obscure the content of the volume of interest.

Rendering a volume of interest requires the volume to be clipped according to the boundary of the volume of interest. Several ways of volume clipping for volume rendering are known. Volume rendering can be achieved by two main classes of algorithms known as raycasting and slice compositing. Both ray casting and slice compositing algorithms are capable to perform the diverse volume rendering methods such as DVR, MIP, MinIP, Average intensity projection, DRR, DCBE, ...

A first way of volume clipping makes use of a volumetric clipping bit mask which indicates for each voxel if it is clipped or not.
A disadvantage of this approach is that the clipping surface is discrete and limited to the resolution of the voxels. So it is not possible to exactly have a planar or spherical clipping surface. Also changing the size of the volume of interest requires recalculation of the clipping bit mask. The clipping bit mask is applicable both to the ray casting and slice compositing volume rendering algorithms. The invention described herein does not make use of the clipping mask.

A second way of volume clipping approaches the boundary of the volume of interest with a polygonal mesh. With this polygonal mesh it becomes possible to exactly clip volumes according to volumes of interest formed with shapes with planar faces such as for example a cube. The polygonal clip mesh clipping can be applied to the slice compositing volume rendering algorithm via depth buffers. It can also be applied to the ray casting volume rendering algorithm in a straightforward way by altering the proxy-geometry according to the polygonal mesh. Curved volume of interest shapes can not be exactly represented with the polygonal mesh. To accurately approach the curved volume of interest the clipping mesh would need to have a very fine tessellation. The present invention described herein does not make use of a polygonal clipping mesh.

From the above it is clear that both the volumetric clipping bit masks and the polygonal clipping meshes are inadequate to exactly define the shape of a curved volume of interest.

### SUMMARY OF THE INVENTION

The present invention relates to a method for rendering curved convex volumes of interest in an accurate way as set out in claim 1.

Specific features for preferred embodiments of the invention are set out in the dependent claims.

The embodiments of the methods of the present invention are generally implemented in the form of a computer program product adapted to carry out the method steps of the present invention when run on a computer. The computer program product is commonly stored in a computer readable carrier medium such as a CD-ROM. Alternatively the computer program product takes the form of an electric signal and can be communicated to a user through electronic communication.

In order to overcome the limitations known in prior art solutions a method for exact curved volume of interest clipping was invented. Instead of using approximate methods like a clipping bit mask or clipping mesh the boundary of the curved volume of interest is found directly by evaluation of an exact mathematical expression.

The curved convex volume of interest can be an ellipsoid such as a sphere.

For each pixel in the rendering view port, the ray intersection points with the convex curved volume of interest boundary, are found. The intersection points are found by solving a system of equations with a first equation of the ray line and a second equation of the curved surface (via mathematical solution, e.g. mathematical root finding). For convex surfaces two intersection points are found, for pixels covered by the projected volume of interest. Rendering these pixels constitutes of evaluating a volume rendering algorithm between the two intersection points.

The present invention is applicable to both the ray casting and slice compositing volume rendering algorithms. For ray casting the two intersection points can be immediately used as start and end points. For slicing the depth buffers can be calculated from the front and back intersection points.

As the intersection points are found via exact mathematical root finding the resulting surface of the volume of interest will have a per rendered pixel exact accurate shape.

The volume rendering method can be direct volume rendering including transfer functions and shading.

Surface shading can be added to the surface of the curved convex volume of interest.

The volume rendering algorithm can be maximum intensity projection (MIP), minimum intensity projection (MinIP), average intensity projection, digital radiography reconstruction (DRR), double contrast barium enema simulation (DCBE).

Calculations required when implementing the method of the present invention can be performed on a central processing unit or alternatively on a graphical processing unit.

Having described in detail preferred embodiments of the current invention, it will now be apparent to those skilled in the art that numerous modifications can be made therein without departing from the scope of the invention as defined in the appending claims.

## Claims

1. A method of volume rendering a curved convex volume of interest of a regular grid volumetric data set with per pixel accuracy comprising the steps of
- determining the pixels that belong to the projected curved convex volume of interest and for each of those pixels:
- determining the front intersection point of a projection ray and the curved convex volume of interest via mathematical solution,
- determining the back intersection point of a projection ray and the curved convex volume of interest via mathematical solution,
- finding the voxels of the volumetric data set that intersect with the ray segment running from the front intersection point to the back intersection point,
- performing a volume rendering method on the found voxels and output the result as a rendered pixel.

2. A method according to claim 1 wherein the volume rendering method can be direct volume rendering including transfer functions and shading.

3. A method according to claim 1 wherein the volume rendering algorithm can be maximum intensity projection (MIP), minimum intensity projection (MinIP), average intensity projection, digital radiography reconstruction (DRR), double contrast barium enema simulation (DCBE).

4. A method according to claim 2 which further adds surface shading to the surface of the curved convex volume of interest.

5. A method according any of the previous claims wherein the curved convex volume of interest is an ellipsoid such as a sphere.

6. A method according to any of the previous claims wherein the volume rendering method is performed with a ray casting algorithm.

7. A method according to any of the previous claims wherein the volume rendering method is performed with a slice compositing algorithm.

8. A method according to the previous claims wherein all calculations are performed on a Central Processing Unit CPU.

9. A method according to the previous claims wherein all calculations are performed on a Graphical Processing Unit GPU.

10. A computer program product adapted to carry out the method of any of claims 1 - 9 when run on a computer.

11. A computer readable medium comprising computer executable program code adapted to carry out the steps of any of claims 1 to 9.
